# EUROPÄISCHE PATENTSCHRIFT

(11) **EP 2 730 395 B1**
(45) Veröffentlichungstag und Bekanntmachung des Hinweises auf die Patenterteilung: **21.10.2015**
(21) Anmeldenummer: 13192470.6
(22) Anmeldetag: 12.11.2013
(51) Int. Cl.: B29C 70/46, B29C 70/48

(54) **Verfahren zur Herstellung einer Welle eines Gasturbinentriebwerks**
Method for producing a shaft of a gas turbine engine
Procédé de fabrication d'un arbre de turbine à gaz

(30) Priorität: 13.11.2012 DE 102012022260
(43) Veröffentlichungstag der Anmeldung: 14.05.2014
(73) Patentinhaber: Rolls-Royce Deutschland Ltd & Co KG, 15827 Blankenfelde-Mahlow (DE)
(72) Erfinder: Beyer, Jörg, 01109 Dresden (DE); Filler, Mirko, 01309 Dresden (DE); Renner, Ole, 01099 Dresden (DE); Steeling, Peer, 01217 Dresden (DE); Pabst, Alexander, 10245 Berlin (DE); Oessenich, Rüdiger, 15834 Rangsdorf (DE)
(74) Vertreter: Hoefer & Partner Patentanwälte mbB

(56) Entgegenhaltungen:
- DE-A1-102007 051 517
- US-A1- 2003 114 231

## Beschreibung

Die vorliegende Erfindung betrifft ein Verfahren zur Herstellung einer Welle eines Gasturbinentriebwerks, insbesondere einer Radialwelle oder einer zur Maschinenachse in einem Winkel angeordneten Welle.

Radialwellen für Gasturbinentriebwerke werden meist in Metallbauweise ausgeführt. Sie dienen zum Starten des Triebwerks, indem ein Elektromotor oder eine Luftturbine, welche in einer externen Getriebebox verbaut sind, über ein Getriebe die Radialwelle antreibt. Diese ist über ein Getriebe mit einem Hochdruckkompressor der Gasturbine verbunden. Zum Starten wird somit der Hochdruckkompressor in Rotation versetzt, um den Verbrennungsvorgang starten zu können.

Im Betrieb des Triebwerks wird über dieselbe Verbindung in umgekehrter Richtung die Welle angetrieben, um über ein externes Getriebe Pumpen und Generatoren anzutreiben.

An derartige Wellen werden die folgenden Anforderungen gestellt. Zum Einen muss die Welle sehr schlank gebaut sein , da sie durch eine Strebe im Zwischengehäuse oder generell durch den zweiten Luftkreislauf bei einem Zweikreis/Zweistrom-Turbinen-Luftstrahltriebwerk geführt werden muss und somit immer einen strömungsmechanischen Widerstand darstellt, der einen direkten Einfluss auf die Triebwerksleistung und Effizienz hat. Hinsichtlich ihrer geometrischen Konfiguration muss die Welle durch Öffnungen in der Triebwerksaufhängung durchgeführt werden, um das externe Getriebe mit dem Hochdruckkompressor zu verbinden. Eine weitere Anforderung besteht darin, dass die Welle hohe Drehmomente bei hohen Drehzahlen in beiden Richtungen übertragen muss.

Radialwellen in Metallbauweise, so wie sie aus dem Stand der Technik bekannt sind, stoßen bei der Triebwerksentwicklung an das Limit ihrer Einsatzfähigkeit, da diese Wellen bereits an der Grenze der biegekritischen Drehzahl ausgelegt sind. Die verwendeten Materialien lassen somit keine Verlängerung oder Verschlankung der Wellengeometrie zu. Hierdurch wird die Entwicklung von Gasturbinentriebwerken mit einem kleineren Kerntriebwerk mit höheren Drehgeschwindigkeiten und einem größeren Fandurchmesser stark behindert. Bei einem größeren Fan und einem kleineren Durchmesser des Kerntriebwerks ergibt sich ein größerer Abstand zwischen dem Kerntriebwerk und einem externen Getriebe (Getriebebox), woraus zwangsläufig längere Radialwellen resultieren müssten. Diese würden in der aus dem Stand der Technik bekannten Metallbauweise dickwandiger, größer und, bedingt durch die Biegethematik, durch ein zentrisches Lager abgestützt ausgebildet werden müssen. Hierdurch ergeben sich ein höheres Gewicht des gesamten Triebwerks sowie eine schlechtere Aerodynamik.

Aus dem Stand der Technik sind Triebwerkswellen für Gasturbinentriebwerke vorbekannt, welche aus Faserlagen, welche in eine hochtemperaturbeständige Kunststoffmatrix eingebildet sind, aufgebaut sind. Ein derartiges Beispiel zeigt die DE 10 2008 056 018 A1. Derartige Wellen weisen einen großen Durchmesser auf und können anders dimensioniert werden, so dass die Anwendung dieser Erkenntnisse auf Radialwellen nicht möglich ist. Zudem sind bei diesen Triebwerkswellen Kraftübertragungselemente im Einsatz, deren Aufbau für Radialwellen nicht geeignet ist. Beispiele hierfür zeigen die DE 10 2009 037 049 A1, die GB 1 599 292 A und die DE 41 07 222 C2.

Die DE102007051517 offenbart:
Ein Verfahren zur Herstellung einer Radialwelle geeignet für ein Fluggasturbinentriebwerk mit folgenden Herstellungsschritten:
   - Bereitstellen eines stabförmigen Kerns mit beidseitigen Endbereichen, welche um den Umfang jeweils eine sinusoide Struktur mit in Längsrichtung des jeweiligen Endbereichs verlaufenden konvexen und konkaven Bereichen aufweist,
   - Umwickeln des Kerns und der Endbereiche mit Kohlefaser in +/-45° Richtung zur Längsachse des Kerns,
   - Ablängen der Endbereiche des somit ausgebildeten rohrförmigen Mittelteils der Radialwelle,
   - Einführen jeweils eines metallischen Lasteinleitendstücks in jeden Endbereich des rohrförmigen Mittelteils, und- Fügen des Lasteinleitendstückes mit dem rohrförmigen Mittelteil.

Der Erfindung liegt die Aufgabe zugrunde, ein Verfahren zur Herstellung einer Welle eines Fluggasturbinentriebwerks, insbesondere einer Radialwelle zu schaffen, welches bei einfachem Aufbau und einfacher, kostengünstiger Durchführbarkeit eine Herstellung einer Welle ermöglicht, die unter Vermeidung der Nachteile des Standes der Technik allen Anforderungen gerecht wird.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß wird somit eine Radialwelle geschaffen, welche in Faserverbundbauweise aufgebaut und hergestellt wird. Dabei werden metallische Endstücke mit einem rohrförmigen Zwischenstück der Welle verbunden. Hierdurch sinkt die Gesamtmasse der Radialwelle. Durch die Verwendung von hochsteifen Fasern ergibt sich ein sehr hoher Anstieg der Steifigkeit. Aufgrund der sich ergebenden höheren biegekritischen Drehzahl ist es nicht erforderlich, die Welle durch ein zusätzliches zentrisches Lager abzustützen. Durch die hohen Steifigkeiten und hohen Festigkeiten der Faserstoffe ist es möglich, sehr lange Wellenkonstruktionen zu realisieren, welche den Abstand zwischen einem Kerntriebwerk und einer externen Getriebebox überbrücken können, wobei keine Erhöhung des Wellendurchmessers notwendig ist. Die erfindungsgemäße Welle zeichnet sich zudem dadurch aus, dass hohe Drehmomente übertragen werden können und dass sich eine erhebliche Erhöhung der Eigenfrequenz ergibt.

Die erfindungsgemäße Radialwelle kann somit sehr schnell drehend ausgeführt werden, so dass Drehzahlen bis 30.000 UpM realisiert werden können. Zudem ist die erfindungsgemäße Radialwelle in der Lage, hohe Drehmomente zu übertragen, beispielsweise bis zu 2.000 Nm. Die Durchmesser derartiger Radialwellen können sehr gering sein, beispielsweise bis maximal 150 mm, verbunden mit sehr geringen Wandstärken von ca. 3 mm, welche das Gesamtgewicht erheblich reduzieren.

Hinsichtlich des erfindungsgemäßen Herstellungsverfahrens sind folgende Herstellungsschritte vorgesehen:
- Bereitstellen eines konischen, stabförmigen Metallkerns mit beidseitigen Endbereichen, wobei die Endbereiche um den Umfang jeweils eine sinusoide Struktur mit in Längsrichtung des jeweiligen Endbereichs verlaufenden konvexen und konkaven Bereichen aufweist,
- Einlegen von strukturierten Stäben (Rundstäben) in die konkaven Bereiche der sinusoiden Struktur. Hierbei wird eine annähernd runde Struktur des Kerns erreicht. Dabei werden die notwendigen Übermaße, welche zum Einpressen der abgelegten Kohlenstofffasern in die Sinusoidtäler dienen, nach dem Entfernen der Rundstäbe, erstellt.
- Umwickeln des Kerns und der Endbereiche mit flachen, gespreizten Kohlefaserbändern in ±45°-Richtung zur Längsachse des Kerns durch Ablegen der Kohlenstofffasern.
- Entfernen der strukturierten Stäbe,
- radiales Einpressen der Kohlefaserlagen in die nach Entfernen der strukturierten Stäbe gebildeten konkaven Bereiche der Endbereiche des Kerns,
- Einlegen von Füllstäbchen aus Kohlefasermaterial in die durch das Einpressen gebildeten konkaven Bereiche der Endbereiche der Kohlefaserlagen zum Auffüllen der Struktur. Hierbei werden für die Herstellung der Füllstäbchen gleichartige Harz- und Fasermaterialien genutzt und im Kompressionsverfahren hergestellt.
- Ablage von hochsteifen Kohlenstofffasern in 0°-Richtung (Wellenlängsrichtung).
- Umwickeln der Kohlenstofffaserlagen sowie der mit den Füllstäbchen versehenen Endbereichen mit +/- 88° zur Längsachse geneigten Kohlefaserbändern,
- Einlegen des umwickelten Kerns in eine mehrteilige Harzinjektionsform,
- Injizieren von Harz in die Harzinjektionsform und Erwärmen und Aushärten des Harzes,
- Entfernen des Kerns,
- Ablängen der Endbereiche des somit ausgebildeten rohrförmigen Mittelteils der Radialwelle,
- Einführen jeweils eines metallischen Lasteinleitendstücks in jeden Endbereich des rohrförmigen Mittelteils, und
- Fügen des Lasteinleitendstückes mit dem rohrförmigen Mittelteil.

In bevorzugter Ausgestaltung der Erfindung ist vorgesehen, dass das Fügen des metallischen Lasteinleitendstücks durch Harzinfiltration des Zwischenraums zwischen dem Lasteinleitendstück und dem Endbereich des rohrförmigen Mittelteils erfolgt. Hierdurch ergibt sich eine formschlüssige Verbindung, nicht jedoch eine stoffschlüssige Verbindung, insbesondere keine Verklebung. Die Verbindung entsteht durch Reibung zwischen dem Harz, das in den Freiraum zwischen dem rohrförmigen Mittelteil und dem Lasteinleitendstück eingebracht wird. Dieser Freiraum ist beispielsweise 0,01 mm bis 0,1 mm dick. Das Lasteinleitendstück ist somit wieder von dem rohrförmigen Mittelteil abziehbar.

In günstiger Ausgestaltung der Erfindung ist vorgesehen, dass das Herstellen der Ummantelung aus parallel zueinander angeordneten Lagen von gespreizten Kohlefaserbändern durch Umwickeln eines polygonalen Kernkörpers, Teilen der Lagen in Einzelstücke und Fixieren der Einzelstücke sowie nachfolgendes Umlegen des mittleren Bereichs der Lagen aus +/- 30°-geneigten Kohlefaserbändern zur Ausbildung der Ummantelung erfolgt.

Der mittlere Bereich der aus Lagen aus +/- 45°-geneigten Kohlefaserbändern aufgebauten Struktur wird in günstiger Weiterbildung der Erfindung mit zumindest einer Lage aus längs der Längsachse angeordneten Kohlefaserbändern umhüllt.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte Längs-Schnittansicht eines Ausführungsbeispiels der erfindungsgemäßen Welle,
- Fig. 3: eine Schnittansicht längs der Linie III - III von Fig. 2,
- Fig. 4 bis 10: Ansichten eines Ausführungsbeispiels des erfindungsgemäßen Lasteinleitendstücks,
- Fig. 11: eine perspektivische Ansicht eines Kerns mit sinusoider Endbereichsstruktur und strukturierten Stäben,
- Fig. 12: eine Ansicht eines folgenden Herstellungsprozesses, bei welchem der Kern 18 mit +/- 45° Lagen aus Faserbändern umwickelt ist,
- Fig. 13: eine Ansicht, analog Fig. 12, eines weiteren Verfahrensschritts,
- Fig. 14: eine Ansicht des Verfahrensschritts des Verpressens der Endbereiche der +/- 45° Lagen,
- Fig. 15: eine Ansicht der Fertigstellung nach Verpressung gemäß Fig. 14,
- Fig. 16: eine Ansicht, analog Fig. 15, des nachfolgenden Verfahrensschrittes nach Einlegen von Füllstäbchen,
- Fig. 17: eine Ansicht des auf Fig. 16 folgenden Verfahrensschrittes nach Ummantelung der in Fig. 16 gezeigten Struktur,
- Fig. 18: eine perspektivische Teil-Ansicht einer Harzinjektionsform,
- Fig. 19: eine perspektivische Ansicht einer Fügevorrichtung zur Verbindung der Lasteinleitendstücke mit dem rohrförmigen Mittelteil der Welle,
- Fig. 20: eine Schnitt-Längsansicht mit Angabe der jeweiligen Lagen aus Kohlenstofffasern, und
- Fig. 21: eine Detailansicht gemäß Fig. 20.

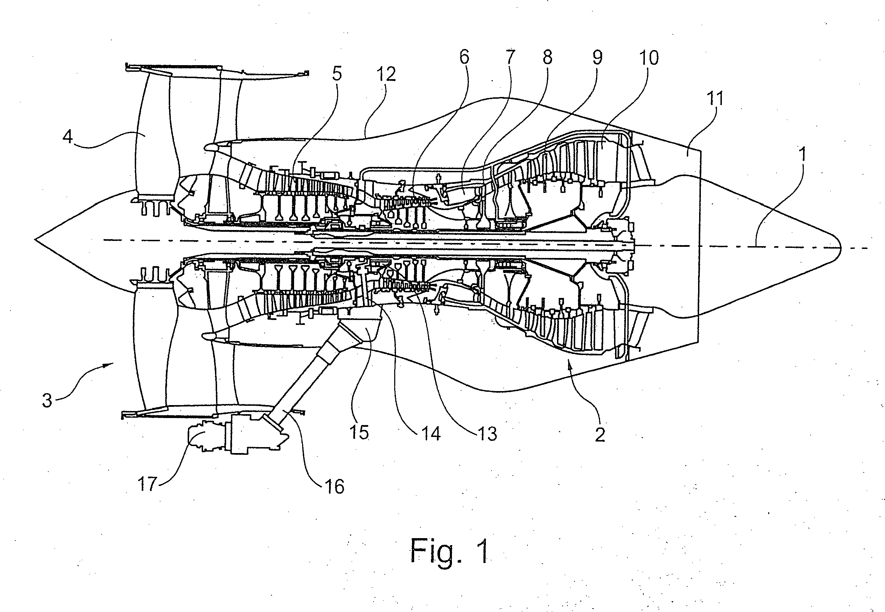

Das Gasturbinentriebwerk 2 gemäß Fig. 1 ist ein allgemein dargestelltes Beispiel, bei dem die Erfindung Anwendung finden kann. Das Triebwerk 2 ist in herkömmlicher Weise ausgebildet und umfasst in Strömungsrichtung hintereinander einen Lufteinlass 3, einen in einem Gehäuse umlaufenden Fan 4, einen Mitteldruckkompressor 5, einen Hochdruckkompressor 6, eine Brennkammer 7, eine Hochdruckturbine 8, eine Mitteldruckturbine 9 und eine Niederdruckturbine 10 sowie eine Abgasdüse 11, die sämtlich um eine zentrale Triebwerksachse angeordnet sind.

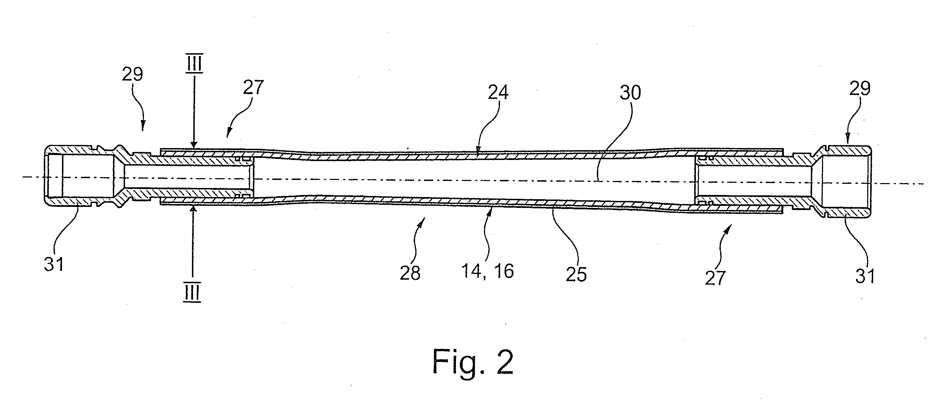

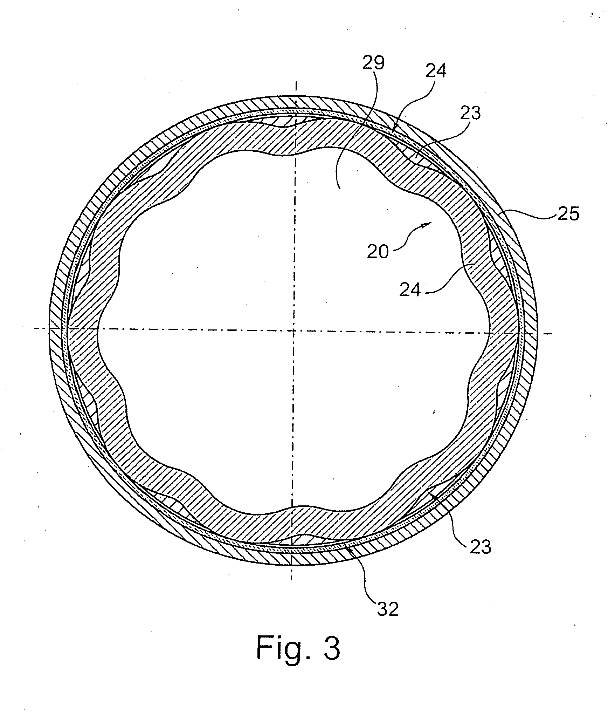

Die Fig. 2 und 3 zeigen ein Ausführungsbeispiel der erfindungsgemäßen Radialwelle bzw. einer Triebwerkswelle der erfindungsgemäßen Art. Die Welle ist entweder als Radialwelle 14 oder als gewinkelt angeordnete Welle 16 ausgebildet und dient dazu, ein Getriebe 13 (siehe Fig. 1) mit einem Getriebe 15 zu verbinden. Das Getriebe 15 kann mit Nebenaggregaten betriebsverbunden sein. Die erfindungsgemäß ausgebildete Welle kann auch in Form einer geneigt angeordneten Welle 16 (siehe Fig. 1) ausgebildet sein, welche mit einem Getriebe 17 zum Anschluss von Nebenaggregaten verbunden ist.

Die folgende Beschreibung bezieht sich auf die Radialwelle 14, analog hierzu ist auch die erfindungsgemäß angeordnete gewinkelte Welle 16 aufgebaut.

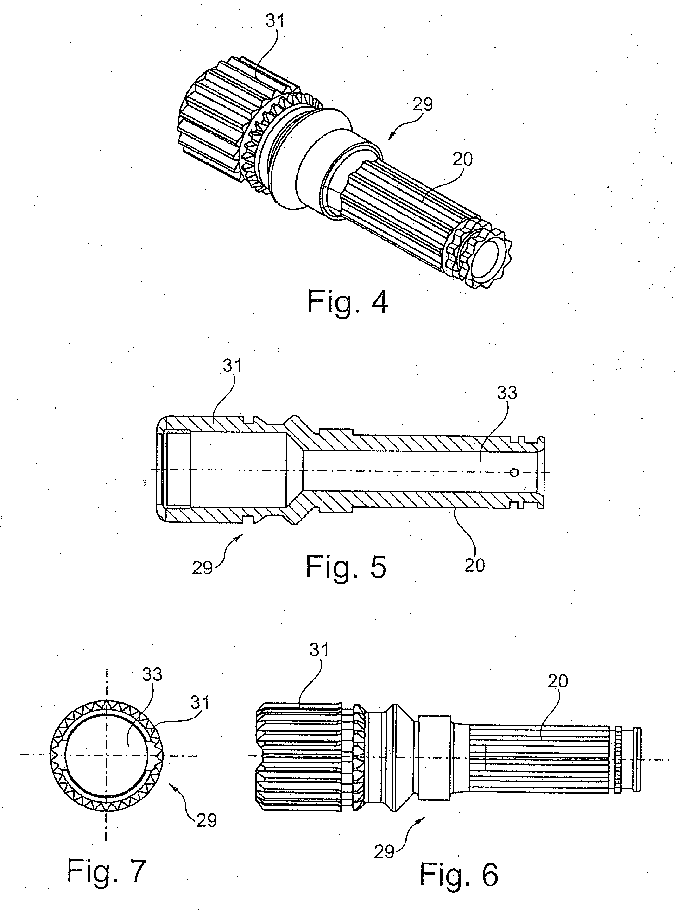

Die Welle 14 umfasst eine innenliegende Schicht aus Lagen 24, welche aus Kohlenstofffasern aufgebaut ist, welche +/- 45° zur Mittelachse 30 der Welle angeordnet sind. Die Lagen 24 bilden somit einen Teil eines rohrförmigen Mittelteils 28 der erfindungsgemäßen Welle 14. Die Welle 14 ist mit zwei Lasteinleitendstücken 29 verbunden, so wie dies nachfolgend noch beschrieben werden wird. Die Lasteinleitendstücke 29 sind an ihrem freien Endbereich jeweils mit einer Verzahnung 31 versehen, welche beispielsweise als Kerbverzahnung ausgebildet sein kann. Dies ist insbesondere in den Fig. 4 bis 10 dargestellt.

Die Fig. 2 und 3 zeigen weiterhin, dass das rohrförmige Mittelteil 28 auf den Lagen 24 weitere Lagen 25 aufweist, welche aus Kohlestofffasern mit +/- 30°-Lage zur Mittelachse 30 ausgebildet sind. Die Lagen 24 bilden eine Zwischenstruktur zur Torsionsübertragung. Auf den Lagen 24 sind Lagen 32 angeordnet, welche aus hochmoduligen Kohlenstofffasern parallel zur Mittelachse 30 der Welle und somit mit 0° zur Mittelachse 30 angeordnet sind und zur Erhöhung der Steifigkeit beitragen. Die Lagen 25 dienen zur Kompaktierung des Verbundes und zur Fixierung der Null-Lagen 32.

Die Endbereiche 27 der Welle 14 bzw. 16 weisen eine sinusoide Innenkontur auf, so wie dies aus Fig. 3 ersichtlich ist. In diese sinusoide Innenkontur ist jeweils ein Lasteinleitendstück 29 eingefügt, welches eine passende sinusoide Außenkontur aufweist, so wie dies in Fig. 3 zu sehen ist. Es ergibt sich somit eine formschlüssige Verbindung. Wie nachfolgend noch beschrieben werden wird, sind die Lagen 24 sowohl an ihrer Innenkontur als auch an ihrer Außenkontur sinusoid. Um die konkaven Zwischenräume auszufüllen, sind Füllstäbchen 23 aus kohlenstofffaserverstärktem Harz angeordnet, auf welchen sich die Schicht der Null-Lagen 32 befindet, welche eine zylindrische Außenkontur aufweist.

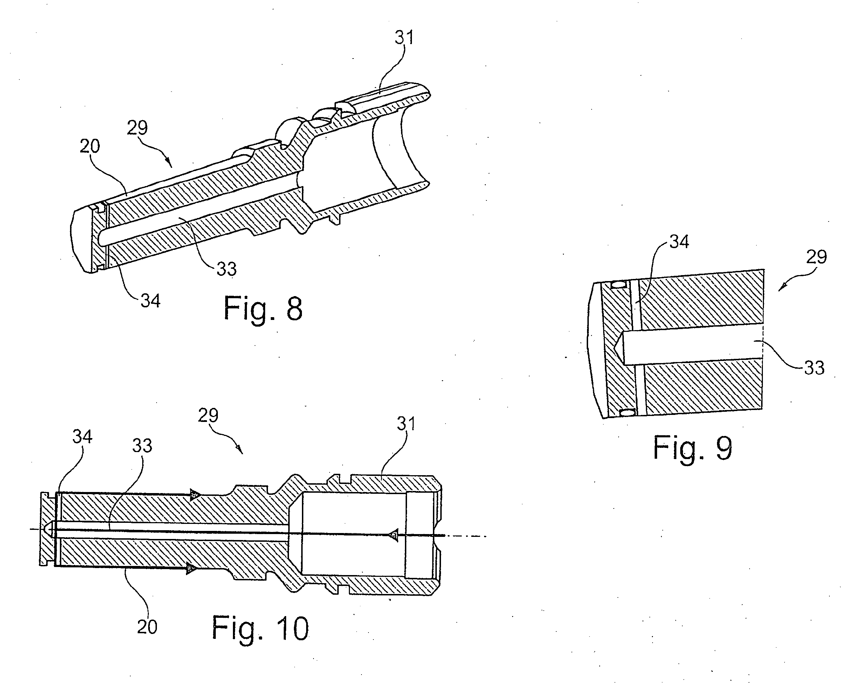

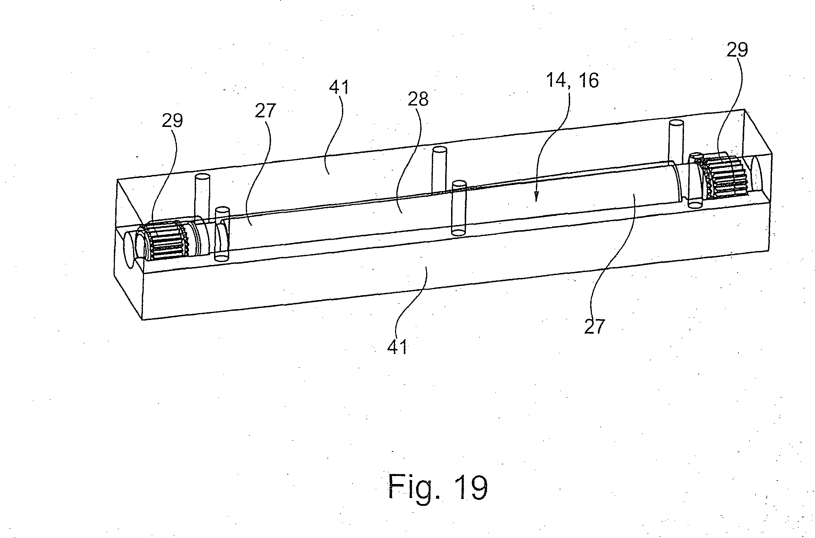

Die Fig. 4 bis 10 zeigen die erfindungsgemäß vorgesehenen Lasteinleitendstücke 29 in unterschiedlichen Darstellungen modifizierter Ausführungsbeispiele. Diese weisen jeweils eine zentrische Ausnehmung 33 auf, welche am Endbereich in Radialkanäle 34 übergeht. Somit ist es beim Verpressen vom Harz im Rahmen der Fügeverbindung (siehe Beschreibung zu Fig. 19) möglich, Harz, wie in Fig. 10 dargestellt, durch die zentrische Ausnehmung 33 und die Radialkanäle 34 auszupressen, um den Zwischenraum zwischen der Außenkontur des Lasteinleitendstücks 29 und dem Endbereich 27 der Welle 14 mit Harz zu füllen. Hierdurch ergibt sich eine passgenaue formschlüssige Verbindung.

Die erfindungsgemäße Radialwelle 14 besteht somit aus einem Faserverbund mit zwei Lasteinleitelementen 29 und einem zentralen rohrförmigen Mittelteil 28. Die Verbindung zwischen dem Faserverbund des Mittelteils 28 und den Lasteinleitendstücken 29 erfolgt somit über die Sinusoidkontur, welche eine Übertragung von hohen Drehmomenten bei verhältnismäßig kleinen Durchmessern ermöglicht. Die Kontur ähnelt dem Verlauf einer Sinusfunktion, welche umlaufend dem Durchmesser folgend verläuft. Diese Sinusoidform ist innenliegend an dem Faserverbundteil ausgebildet. Wie nachfolgend beschrieben, bildet diese Ausbildung des Endbereichs 27 einen wesentlichen Aspekt der vorliegenden Erfindung. Der Faserverbundteil der Welle 14 besteht aus einem rotationssymmetrischen Aufbau, welcher von innen nach außen die bereits erwähnten Lagen 24 mit +/- 45°-Ausrichtung, eine Null-Lage 32 sowie Lagen 25 mit +/- 30°- Ausrichtung umfasst.

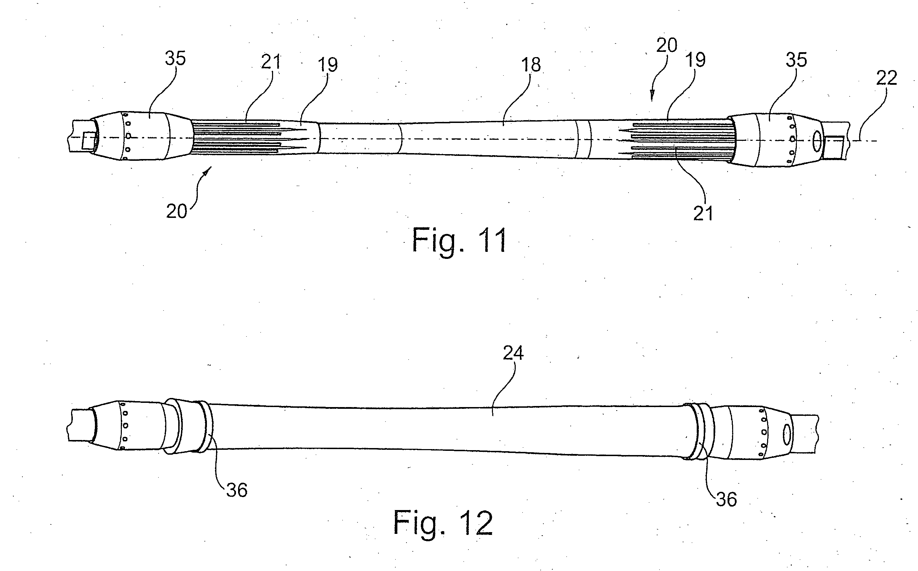

Nachfolgend wird das Herstellungsverfahren im Einzelnen beschrieben. Die Fig. 11 zeigt einen bevorzugt mehrteiligen Kern 18. Dieser ist konisch ausgebildet, da auch die Welle 14 eine leicht konische Struktur aufweist. Der Kern 18 ist mit Endbereichen 19 versehen, welche eine sinusoide Struktur 20 aufweisen. In die konkaven Bereiche sind strukturierte Stäbe 21 eingelegt, welche mittels einer Positionierhilfe 35 gehalten werden. Diesen Zustand zeigt Fig. 11. Nachfolgend werden +/- 45° Lagen mit einem üblichen Wickelverfahren aufgebracht. Dabei werden die Fasern trocken aufgelegt, sie bestehen aus gespreizten Kohlefaserbändern und sind somit flach, damit sich die Kreuzungsstellen zwischen +/- 45°-Anordnungen gut ergeben. Die Lagen 24 werden vollständig über die Endbereiche 19 aufgebracht, so wie dies in Fig. 12 dargestellt ist. Eine Fixierung der Endbereich der Lagen 24 erfolgt mittels Kabelbindern 36 (siehe Fig. 12).

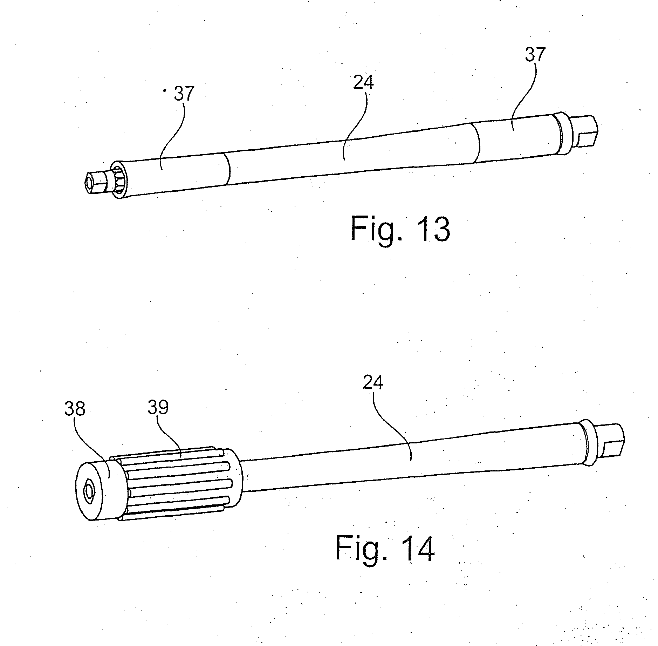

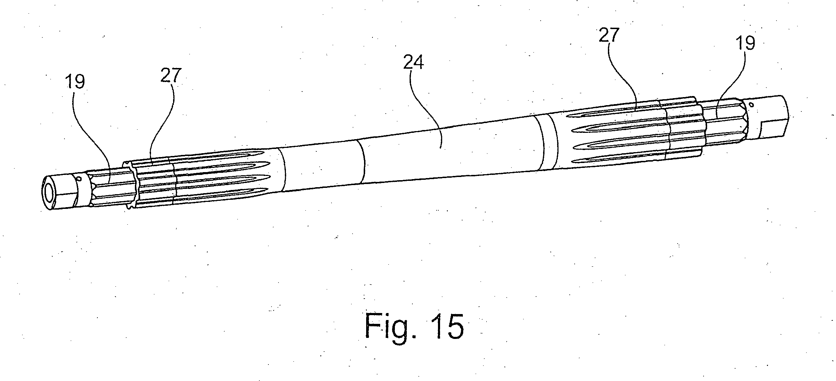

Wie in Fig. 13 dargestellt, werden die Endbereiche 37 gebindert, um die Lagen des Kohlenstofffasermaterials zu halten, nachdem die Positionierhilfen 35 entfernt wurden. Nachfolgend erfolgt ein Verpressen der Endbereiche der Lagen 24 mittels eines Verpresswerkzeugs 38, welches radiale Schlitze aufweist, in welchen Presselemente 39 radial bewegbar sind. Somit werden die Lagen 24 in die konkaven Bereiche der Endbereiche 19 des Kerns 18 eingepresst (Fig. 14). Der sich hierbei bildende Zwischenschritt ist in Fig. 15 dargestellt. Es ist ersichtlich, dass die Lagen 24 der Sinusoidkontur 19 des Kerns 18 folgen, so wie dies auch in Fig. 3 als Endresultat dargestellt ist.

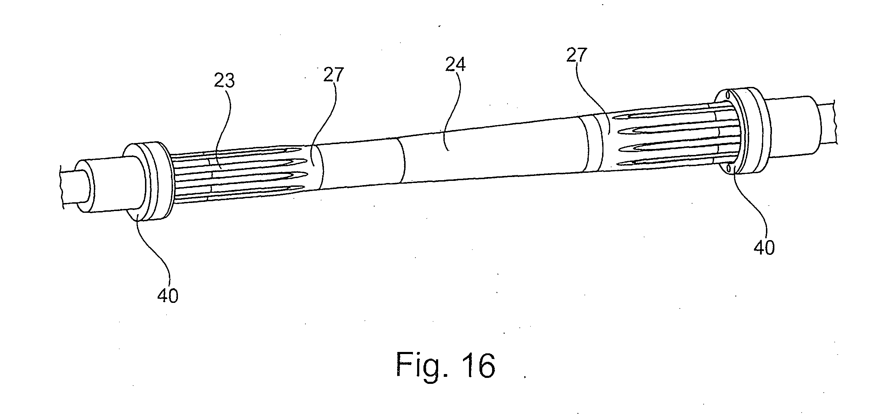

Nachfolgend werden, wie in Fig. 16 dargestellt, Füllstäbchen 23 eingesetzt, welche die konkaven Bereiche der Außenkontur der Endbereiche 27 der Lagen 24 auffüllen. Die Füllstäbchen 23 sind an einer Positionierhilfe 40 gehaltert.

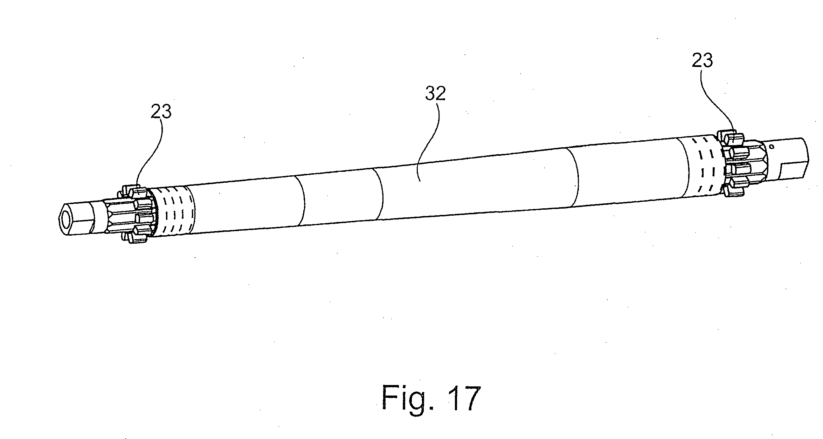

Die Füllstäbchen 23 sind als konturierte, flache Stäbchen ausgebildet, so wie sich dies aus Fig. 3 ergibt. Sie füllen somit die konkaven Bereiche der Sinusoidstruktur vollständig aus, so dass sich eine zylindrische Außenkontur ergibt. Auf diese werden, wie in Fig. 17 dargestellt, Null-Lagen 32 in Form einer Matte oder umschlingender Streifen aufgelegt. Die Null-Lagen werden mit zusätzlichen Werkzeugen hergestellt. Hierbei wird insbesondere ein quaderförmiger Wickelkern verwendet, welcher einen Eckradius aufweist. Die hochsteifen Fasern werden auf den quaderförmigen Wickelkern aufgelegt, nachfolgend geschnitten und abgenommen und gemäß Fig. 17 aufgebracht.

Dabei kann vorgesehen sein, dass zumindest radial angrenzend an die Lasteinleitendstücke 29 zumindest eine Lage aus +/- 88° angeordneten Kohlefaserbändern, insbesondere anstelle der Null-Lagen 32, angeordnet wird.

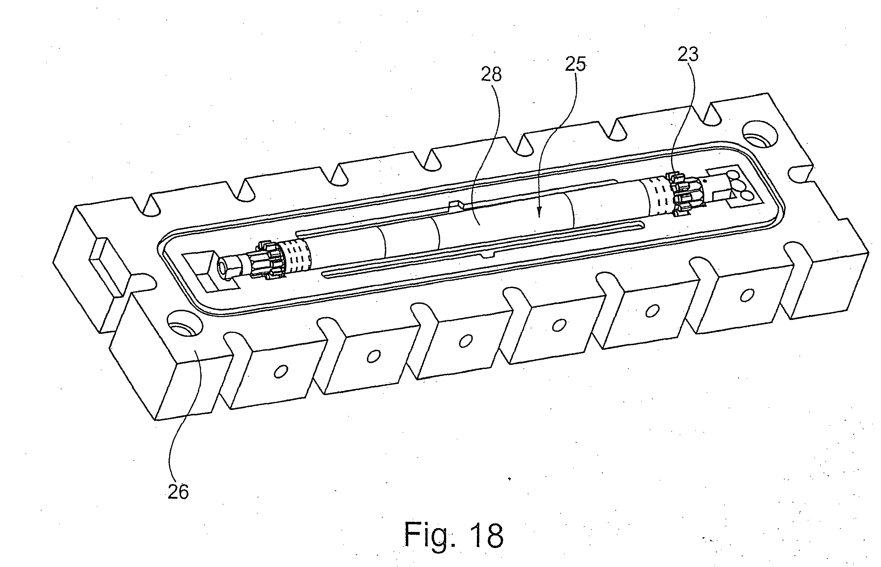

Auf die somit hergestellte Struktur werden +/- 30° Lagen 25 aufgebracht, so wie dies sich in der Darstellung der Fig. 18 ergibt. Nachfolgend wird die gesamte Anordnung in eine mehrteilige Harzinjektionsform 26 eingelegt und mit Harz infiltriert. Das Harz wird somit unter Druck in die trockene Faservorform, d.h. in die Lagen 24, 32 und 25 eingepresst. Hierbei handelt es sich um ein Hochtemperaturharzsystem, welches schnell vernetzt, nachdem die Anordnung auf eine geeignete Temperatur erwärmt wurde. Beispielsweise wird die Harzmenge innerhalb von 5 Minuten auf 140°C erhitzt, wobei das Harz innerhalb von 3 Minuten in das Werkzeug eingespritzt wird, um die Lagen 24, 32 und 25 vollständig zu vernetzen.

Nachfolgend werden die einzelnen Teile des Kerns 18 bzw. dessen Endbereiche 19 entnommen, die überstehenden Bereiche der Füllstäbchen 23 werden entfernt. Nunmehr erfolgt ein Einstecken der sinusoiden Endbereiche der Lasteinleitendstücke 29 in das rohrförmige Mittelteil 28 der Welle 14. Die Länge der sinusoiden Bereiche beträgt beispielsweise zwischen 50 und 70 mm. Um die Lasteinleitendstücke 29 mit dem rohrförmigen Mitteilteil 28 zu fügen, erfolgt, wie in Fig. 19 dargestellt, ein Einlegen in eine Fügevorrichtung 41, welche mehrteilig ausgebildet ist. Nachfolgend wird stirnseitig Harz injiziert, so wie dies schematisch in Fig. 10 gezeigt ist. Nunmehr ist die Radialwelle 14 fertiggestellt.

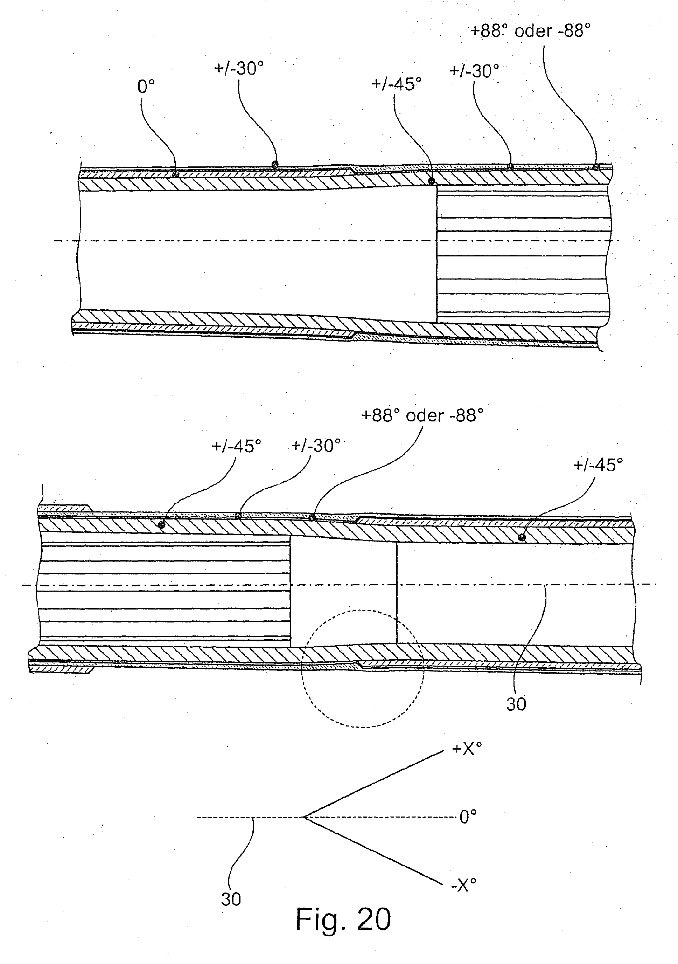

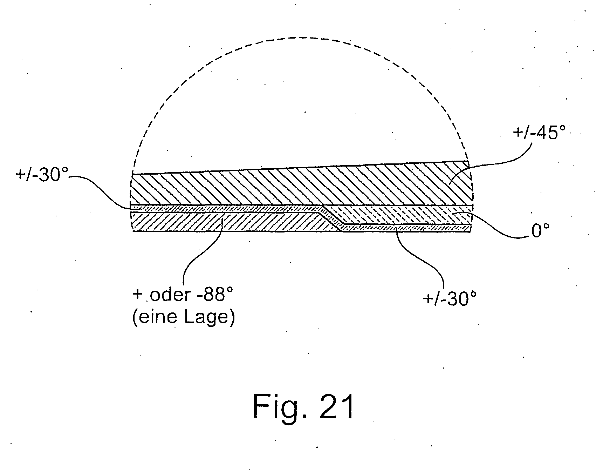

Die Figuren 20 und 21 zeigen eine Schnittansicht parallel zur Mittelachse 30 der Welle 14, 16 mit Darstellung der Anordnung der einzelnen Lagen der Kohlenstofffasern und deren winkelmäßige Ausrichtung, bezogen auf die Mittelachse 30.

### Bezugszeichenliste:

- 1: Triebwerksachse
- 2: Gasturbinentriebwerk /Kerntriebwerk
- 3: Lufteinlass
- 4: Fan
- 5: Mitteldruckkompressor (Verdichter)
- 6: Hochdruckkompressor
- 7: Brennkammern
- 8: Hochdruckturbine
- 9: Mitteldruckturbine
- 10: Niederdruckturbine
- 11: Abgasdüse
- 12: Triebwerksgehäuse
- 13: Getriebe
- 14: Radialwelle
- 15: Getriebe
- 16: Welle
- 17: Getriebe
- 18: Kern
- 19: Endbereich des Kerns
- 20: Sinusoide Struktur
- 21: Strukturierter Stab/ Rundstab
- 22: Längsachse
- 23: Füllstäbchen
- 24: +/- 45° Lagen
- 25: +/- 30° Lagen
- 26: Harzinjektionsform
- 27: Endbereich der Welle 14, 16
- 28: rohrförmiges Mittelteil
- 29: Lasteinleitendstück
- 30: Mittelachse der Welle
- 31: Verzahnung
- 32: Null-Lagen
- 33: zentrische Ausnehmung
- 34: Radialkanal
- 35: Postionierhilfe
- 36: Kabelbinder
- 37: gebinderte Bereiche
- 38: Verpresswerkzeug
- 39: Presselemente
- 40: Positionierhilfe
- 41: Fügevorrichtung

## Patentansprüche

1. Verfahren zur Herstellung einer Radialwelle (14, 16) eines Fluggasturbinentriebwerks (2) mit folgenden Herstellungsschritten:
- Bereitstellen eines konischen, stabförmigen Kerns (18) mit beidseitigen Endbereichen (19), welche um den Umfang jeweils eine sinusoide Struktur (20) mit in Längsrichtung des jeweiligen Endbereichs (19) verlaufenden konvexen und konkaven Bereichen aufweist,
- Einlegen von strukturierten Stäben (21) in die konkaven Bereiche der sinusoiden Struktur (20),
- Umwickeln des Kerns (18) und der Endbereiche (19) mit flachen, gespreizten Kohlefaserbändern in ±45°-Richtung (24) zur Längsachse (22) des Kerns (18).
- Entfernen der strukturierten Stäbe (21),
- radiales Einpressen der Kohlefaserlagen (24) in die nach Entfernen der strukturierten Stäbe (21) gebildeten konkaven Bereiche der Endbereiche (19) des Kerns (18),
- Einlegen von Füllstäbchen (23) aus Kohlefasermaterial in die durch das Einpressen gebildeten konkaven Bereiche der Endbereiche der Kohlefaserlagen (24),
- Umwickeln der Lagen aus Kohlefaserlagen (24) sowie der mit den Füllstäbchen versehenen Endbereichen mit +/- 30° zur Längsachse (22) geneigten Kohlefaserbändern (25),
- Einlegen des umwickelten Kerns (18) in eine mehrteilige Harzinjektionsform (26),
- Injizieren von Harz in die Harzinjektionsform (26) und Erwärmen und Aushärten des Harzes,
- Entfernen des Kerns (18),
- Ablängen der Endbereiche (27) des somit ausgebildeten rohrförmigen Mittelteils (28) der Radialwelle (14, 16),
- Einführen jeweils eines metallischen Lasteinleitendstücks (29) in jeden Endbereich des rohrförmigen Mittelteils (28), und
- Fügen des Lasteinleitendstückes (29) mit dem rohrförmigen Mittelteil (28).

2. Verfahren nach Anspruch 1, **dadurch gekennzeichnet, dass** das Fügen durch Harzeinpressen in einen zwischen dem Lasteinleitendstück (29) und dem Endbereich (27) des rohrförmigen Mittelteils (28) gebildeten Spalts erfolgt.

3. Verfahren nach Anspruch 1 oder 2, **dadurch gekennzeichnet, dass** die Lagen (24) aus +/- 45° geneigten Kohlenfaserbändern mit zumindest einer Lage aus längs der Längsachse (30) angeordneten Null-Lagen (32) ummantelt werden.

4. Verfahren nach Anspruch 3, **dadurch gekennzeichnet, dass** das Herstellen der Ummantelung aus parallel zueinander angeordneten Lagen (32) von gespreizten Kohlefaserbändern durch Umwickeln eines polygonalen Kernkörpers, Teilen der Lagen in Einzelstücke und Fixieren der Einzelstücke sowie nachfolgendes Umlegen des mittleren Bereichs (28) der Lagen (24) aus +/- 45° geneigten Kohlefaserbändern zur Ausbildung der Ummantelung aus Null-Lagen (32) erfolgt.

5. Verfahren nach einem der Ansprüche 3 oder 4, **dadurch gekennzeichnet, dass** zumindest radial angrenzend an die Lasteinleitendstücke (29) zumindest eine Lage aus +/- 88° angeordneten Kohlefaserbändern, insbesondere anstelle der Null-Lagen (32), angeordnet wird.

## Claims

1. Method for manufacturing a radial shaft (14, 16) of an aircraft gas-turbine engine (2) having the following manufacturing steps:
- provision of a conical, rod-shaped core (18) with end areas (19) at both sides, said end areas (19) each having around their circumference a sinusoidal structure (20) with convex and concave areas extending in the longitudinal direction of the respective end area (19),
- placing of structured rods (21) into the concave areas of the sinusoidal structure (20),
- wrapping the core (18) and the end areas (19) with flat and widened carbon fiber strips (24) in a direction of ± 45° to the longitudinal axis (22) of the core (18),
- removal of the structured rods (21),
- radial pressing of the carbon fiber layers (24) into the concave zones of the end areas (19) of the core (18) formed after removal of the structured rods (21),
- placing of filler rods (23) of carbon fiber material into the concave zones of the end areas of the carbon fiber layers (24) formed by pressing,
- wrapping the arrangernents of carbon fiber layers (24) and the end areas provided with the filler rods with carbon fiber strips (25) inclined at +/- 30° to the longitudinal axis (22),
- placing the wrapped core (18) into a multi-part resin injection mould (26),
- injection of resin into the resin injection mould (26), and heating and curing of the resin,
- removal of the core (18),
- cutting to length of the end areas (27) of the tubular center part (28) of the radial shaft (14, 16) thus formed,
- insertion of a metallic load-input end piece (29) into each end area of the tubular center part (28), and
- joining the load-input end piece (29) to the tubular center part (28).

2. Method in accordance with Claim 1, **characterized in that** joining is accomplished by pressing resin into a gap formed between the load-input end piece (29) and the end area (27) of the tubular center part (28).

3. Method in accordance with Claim 1 or 2, **characterized in that** the layers (24) of carbon fiber strips inclined by +/- 45° are jacketed with at least one arrangement of zero layers (32) positioned along the longitudinal axis (30).

4. Method in accordance with Claim 3, **characterized in that** the jacket is made of layers (32) of widened carbon fiber strips arranged parallel to one another by winding the layers around a polygonal core element, dividing the layers into individual sections and fixing the individual sections, plus subsequent folding of the center area (28) of the layers (24) made from carbon fiber strips inclined by +/- 45°, in order to form the jacket from zero layers (32).

5. Method in accordance with one of the Claims 3 or 4, **characterized in that** at least one layer of carbon fiber strips arranged at +/- 88° is positioned at least radially adjoining the load-input end pieces (29), in particular instead of the zero layers (32).

## Revendications

1. Procédé de fabrication d'un arbre radial (14, 16) d'un moteur d'avion à turbine à gaz (2), comprenant les étapes suivantes :
- mise à disposition d'un noyau (18) conique en forme de barre avec des deux côtés des zones terminales (19) qui présentent respectivement sur leur pourtour une structure (20) sinusoïdale avec des parties convexes et concaves s'étendant dans le sens longitudinal de la zone terminale (19) respective,
- insertion de tiges (21) structurées dans les parties concaves de la structure (20) sinusoïdale,
- enveloppement du noyau (18) et des zones terminales (19) avec des rubans de fibres de carbone (24) plats, élargis, selon la direction ±45° par rapport à l'axe longitudinal (22) du noyau (18),
- retrait des tiges (21) structurées,
- enfoncement radial des couches de fibres de carbone (24) dans les parties concaves des zones terminales (19) du noyau (18), qui ont été formées après le retrait des tiges (21) structurées,
- insertion de baguettes de remplissage (23) en matériau en fibres de carbone dans les parties concaves des zones terminales des couches de fibres de carbone (24), qui ont été formées par enfoncement,
- enveloppement des dispositions en couches de fibres de carbone (24) ainsi que des zones terminales munies de baguettes de remplissage avec des rubans de fibres de carbone (25) inclinés de +/-30° par rapport à l'axe longitudinal (22),
- insertion du noyau (18) enveloppé dans un moule pour injection de résine (26) en plusieurs pièces,
- injection de résine dans le moule pour injection de résine (26) et chauffage et durcissement de la résine,
- retrait du noyau (18),
- découpe des zones terminales (27) de la partie centrale (28) tubulaire de l'arbre radial (14, 16) ainsi formée,
- insertion d'une pièce métallique introductrice de charge (29) dans chaque zone terminale de la partie centrale (28) tubulaire, et
- assemblage de la pièce introductrice de charge (29) avec la partie centrale (28) tubulaire.

2. Procédé selon la revendication n° 1, **caractérisé en ce que** l'assemblage est réalisé par injection de résine dans un interstice formé entre la pièce introductrice de charge (29) et la zone terminale (27) de la partie centrale (28) tubulaire.

3. Procédé selon la revendication n° 1 ou n° 2, **caractérisé en ce que** les couches (24) constituées de rubans de fibres de carbone inclinés à +/- 45° sont enveloppées par au moins une disposition de couches zéro (32) positionnées le long de l'axe longitudinal (30).

4. Procédé selon la revendication n° 3, **caractérisé en ce que** la fabrication de l'enveloppe constituée de couches (32) parallèles de rubans de fibres de carbone élargis est réalisée par enveloppement d'un corps de noyau polygonal, fractionnement des couches en pièces individuelles et fixation des pièces individuelles, puis plissement de la zone centrale (28) des couches (24) en rubans de fibres de carbone inclinés à +/- 45° pour former l'enveloppe de couches zéro (32).

5. Procédé selon une des revendications n° 3 ou n° 4, **caractérisé en ce que** jouxtant au moins radialement les pièces introductrices de charge (29) est placée, en particulier au lieu des couches zéro (32), au moins une couche de rubans de fibres de carbone disposés à +/-88°.
